# EUROPÄISCHE PATENTSCHRIFT

(11) **EP 3 771 583 B1**
(45) Veröffentlichungstag und Bekanntmachung des Hinweises auf die Patenterteilung: **07.09.2022**
(21) Anmeldenummer: 20185179.7
(22) Anmeldetag: 10.07.2020
(51) Int. Cl.: B60K 6/48, B60W 10/02, B60W 10/06, B60W 10/08, B60W 10/113, B60W 20/40, F16D 48/06, F16D 13/38, F16H 61/688

(54) **VERFAHREN ZUM STARTEN EINES VERBRENNUNGSMOTORS IN EINEM ANTRIEBSSTRANG MIT HYBRIDISIERTEM DOPPELKUPPLUNGSGETRIEBE**
METHOD FOR STARTING A COMBUSTION ENGINE IN A DRIVE TRAIN WITH HYBRIDIZED DUAL CLUTCH TRANSMISSION
PROCÉDÉ DE DÉMARRAGE D'UN MOTEUR À COMBUSTION INTERNE DANS UNE CHAINE CINÉMATIQUE POURVUE DE BOÎTE DE VITESSES HYBRIDE À DOUBLE EMBRAYAGE

(30) Priorität: 31.07.2019 DE 102019211421; 19.12.2019 DE 102019220191
(43) Veröffentlichungstag der Anmeldung: 03.02.2021
(73) Patentinhaber: Magna PT B.V. & Co. KG, 74199 Untergruppenbach (DE)
(72) Erfinder: OTT, Mario, 70839 Gerlingen (DE); YU, Yang, 74080 Heilbronn (DE)
(74) Vertreter: Rausch, Gabriele

(56) Entgegenhaltungen:
- DE-A1-102010 004 711
- DE-A1-102011 003 080
- DE-A1-102017 214 396

## Beschreibung

Die Erfindung geht aus von einem Verfahren zum Starten eines Verbrennungsmotors in einem Antriebsstrang mit hybridisiertem Doppelkupplungsgetriebe mit zwei Kupplungen und zwei Teilgetrieben, wobei eine elektrische Maschine an ein Teilgetriebe angebunden ist, und der Verbrennungsmotor über mindestens zwei Kupplungen mit beiden Teilgetrieben verbindbar ist, wobei ausgehend von einem rein elektrischen Fahrbetrieb über das eine Teilgetriebe und einer ersten Gangstufe der Verbrennungsmotor gestartet wird, wobei die Antriebsleistung der elektrischen Maschine über beide Kupplungen auf das nicht elektrifizierte Teilgetriebe übertragen wird.

### Stand der Technik

Fahrzeuge mit einer hybriden Antriebsstruktur weisen einen Verbrennungsmotor und ein zweites Antriebsaggregat auf, welches beispielsweise ein Elektromotor sein kann. So kann das Antriebsmoment während des Fahrbetriebes des Hybridfahrzeuges von beiden Antriebsaggregaten aufgebracht werden.

Aus der DE 10 2008 040 692 A1 ist ein Verfahren zum Anfahren eines solchen Hybridfahrzeuges bekannt, welches eine elektrische Maschine und ein Verbrennungsmotor aufweist, wobei die elektrische Maschine auf einem zweiten Teilgetriebe eines zwei Teilgetriebe aufweisenden Doppelkupplungsgetriebes angeordnet ist, wobei beim Anfahren des Hybridfahrzeuges mit der elektrischen Maschine der Verbrennungsmotor gestartet wird, ohne dass die an einem das Doppelkupplungsgetriebe enthaltenden Antriebsstrang anliegende Spannung unterbrochen wird.

Der Verbrennungsmotor kann nicht gestartet werden, falls keine ausreichend hohe Drehzahl am Getriebeeingang zum Start des Verbrennungsmotors anliegt.

Im Stand der Technik fährt das Hybridfahrzeug rein elektrisch. Dazu sind die beiden Kupplungen geöffnet. Das Antriebsmoment, welches die elektrische Maschine EM erzeugt, wird über das zweite Teilgetriebe, auf welchem der zweite Gang geschaltet ist, über eine geschlossene Klauenkupplung an die Räder weitergeleitet. In diesem Moment ist der Antriebsstrang verspannt und ein konstantes Antriebsmoment liegt an den Rädern an. Das Fahrerwunschmoment kann nicht von der EM bereitgestellt werden, weshalb der Verbrennungsmotor zugeschaltet werden soll. Um das Hybridfahrzeug ohne ein Zurückrollen weiter zu bewegen, wird die zweite Kupplung geschlossen. Das von der elektrischen Maschine gelieferte Antriebsmoment verteilt sich einmal über das zweite Teilgetriebe und die zweite Klauenkupplung auf die Räder, sowie über die geschlossene zweite Kupplung in Richtung Verbrennungsmotor. Da das erste Teilgetriebe noch inaktiv ist, wird der erste Gang eingelegt und die erste Klauenkupplung geschlossen.

Anschließend wird die erste Kupplung soweit geschlossen, dass sie das Antriebsmoment, welches von der elektrischen Maschine übertragen wird, schlupfend stellt. Sobald das Antriebsmoment der elektrischen Maschine vollständig über die erste Kupplung geleitet wird, ist die zweite Klauenkupplung momentenfrei und kann geöffnet werden. Somit wird der zweite Gang ausgelegt und das zweite Teilgetriebe in einen neutralen Zustand versetzt. Das zweite Teilgetriebe ist somit inaktiv und überträgt kein Antriebsmoment mehr direkt auf die Räder. Das Antriebsmoment wird nun auf das erste Teilgetriebe umgeleitet.

Sobald dies geschehen ist, wird von der elektrischen Maschine das maximale Antriebsmoment gefordert. Die erste Kupplung schlupft und überträgt nur einen Teil des von der elektrischen Maschine bereitgestellten maximalen Antriebsmomentes.

Allerdings ist es so, dass die Leistung an einer Kupplung immer von der schnell drehenden Seite zur langsam drehenden Seite fließt, so dass die Lösung im Stand der Technik einen Verbrennungsmotor für Fahrzeuggeschwindigkeiten ungleich 0 km/h nicht anschleppen kann.

Aus der DE 10 2011 003 080 A1 ist ein Verfahren zum Starten eines Verbrennungsmotors in einem Antriebsstrang bekannt mit hybridisiertem Doppelkupplungsgetriebe mit zwei Kupplungen und zwei Teilgetrieben, wobei eine elektrische Maschine an das elektrifizierte Teilgetriebe angebunden ist, und der Verbrennungsmotor über zwei Kupplungen mit beiden Teilgetrieben verbindbar ist, wobei ausgehend von einem rein elektrischen Fahrbetrieb über das elektrifizierte Teilgetriebe und eine erste Gangstufe im elektrifizierten Teilgetriebe der Verbrennungsmotor gestartet wird, wobei die Antriebsleistung der elektrischen Maschine über beide Kupplungen auf das nicht elektrifizierte Teilgetriebe übertragen wird, wobei das elektrifizierte Teilgetriebe neutral geschaltet wird, während das nicht elektrifizierte Teilgetriebe in einer zweiten Gangstufe betrieben wird.

Aus der DE 10 2010 004 711 A1 ist ein Antriebsstrang mit Verbrennungsmotors bekannt mit hybridisiertem Doppelkupplungsgetriebe mit zwei Kupplungen und zwei Teilgetrieben, wobei eine elektrische Maschine an das elektrifizierte Teilgetriebe angebunden ist, und der Verbrennungsmotor einen Trennkupplung K0 und über zwei weitere Kupplungen mit beiden Teilgetrieben verbindbar ist. Die Anordnung kann zum Starten des Verbrennungsmotors bei rein elektrischem Fahren verwendet werden.

Aus der DE 10 2017 214 396 A1 ist ebenfalls eine Anordnung mit Doppelkupplung und Trennkupplung, sowie einer Anbindung einer elektrischen Maschine an ein Teilgetriebe bekannt.

Es ist Aufgabe der Erfindung das Problem des Startens eines Verbrennungsmotors sowie den weiteren Antriebsverlauf in der geschilderten Konfiguration zu optimieren.

### Beschreibung der Erfindung

Die Aufgabe wird gelöst mit einem Verfahren nach Anspruch 1, zum Starten eines Verbrennungsmotors in einem Antriebsstrang mit hybridisiertem Doppelkupplungsgetriebe mit zwei Kupplungen und zwei Teilgetrieben, wobei eine elektrische Maschine an das eine elektrifizierte Teilgetriebe angebunden ist, und der Verbrennungsmotor über mindesten zwei Kupplungen mit beiden Teilgetrieben verbindbar ist, wobei ausgehend von einem rein elektrischen Fahrbetrieb über das Teilgetriebe und einer ersten Gangstufe des elektrifizierten Teilgetriebes der Verbrennungsmotor gestartet wird, wobei die Antriebsleistung der elektrischen Maschine EM über beide Kupplungen auf das nicht elektrifizierte Teilgetriebe übertragen wird, und das elektrifizierte Teilgetriebe neutral geschaltet wird, während das nichtelektrifizierte Teilgetriebe in einer zweiten Gangstufe betrieben wird.

Dabei ist unter der ersten und der zweiten Gangstufe zu verstehen, dass eine Auswahl für eine Gangstufe für jedes der Teilgetriebe, im Sinnen einer anderen Gangstufe, getroffen wird. Es heißt nicht, dass es dem ersten Gang und dem zweiten Gang eines Getriebes entspräche, entsprechend einer konventionellen Anordnung von Untersetzung in niedrigen bis zu einer Übersetzung in hohen Gängen.

In dem erfindungsgemäßen Aufbau des Antriebsstrangs wird einen zusätzliche Trennkupplung verwendet, um den Verbrennungsmotor unabhängig vom Hybridantriebssystem betreiben zu können.

Die Aufgabe wird gelöst mit einem Antriebsstrang wie oben beschrieben, wobei durch Entkopplung der Drehzahl der elektrischen Maschine EM von der Abtriebsdrehzahl ein Starten des Verbrennungsmotors möglich ist.

Dazu wird die Kupplung des elektrifizierten Teilgetriebes geschlossen und die Kupplung des nicht elektrifizierten Teilgetriebes im Schlupf betrieben. Zusätzlich wird im nicht elektrifizierten Teilgetriebe ein Gang mit einer längeren Übersetzung als der aktive Fahrgang vorgewählt.

Nur dadurch ist es möglich, dass Leistung an der Kupplung des nicht elektrifizierten Teilgetriebes von der schnell drehenden Seite der elektrischen Maschine EM zur langsam drehenden Seite des Teilgetriebes der zweiten Gangstufe fließt. Um das Verfahren zu unterstützen wird das Drehmoment der elektrischen Maschine EM mit dem Schließen, bzw. mit dem teilweisen Schließen der Kupplungen erhöht.

Durch Verwendung der Trennkupplung kann zudem das Einstellen der Drehzahlen von elektrischer Maschine und Verbrennungsmotor unabhängig voneinander erfolgen.

Das erfindungsgenmäße Verfahren sieht in einer Ausführungsform vor, dass nach dem Erreichen einer Zieldrehzahl des Verbrennungsmotors das Drehmoment des Verbrennungsmotors auf die erste Gangstufe des elektrifizierten Teilgetriebes gelegt wird. Das erfindungsgemäße Verfahren legt fest, dass nach dem Erreichen einer Zieldrehzahl des Verbrennungsmotors das Drehmoment des Verbrennungsmotors auf die zweite Gangstufe des nicht elektrifizierten Teilgetriebes gelegt wird.

Dadurch ist ein Boosten über beide Teilgetriebe oder über das elektrifizierte Teilgetriebe ermöglicht.

### Beispiel der Erfindung

Die Erfindung wird mit den Figuren und der nachfolgenden Beschreibung näher erläutert.
Figur 1 zeigt einen Antriebsstrang mit den unterschiedlichen Leistungswegen in einer beispielhaften Ausführungsform,
Figur 2 und 3 zeigen je ein Diagramm der Parameter des Antriebsstranges mit TG2 als elektrifizierten Getriebeteil in je einer nicht erfindungsgemäßen Option,
Figur 4 und 5 zeigen je ein Diagramm der Parameter des Antriebsstranges mit TG1 als elektrifizierten Getriebeteil in je einer nicht erfindungsgemäßen Option,
Figur 6 und 7 zeigen je ein Diagramm der Parameter des Antriebsstranges mit TG2 als elektrifizierten Getriebeteil in je einer Option mit angebundener Trennkupplung K0,
Figur 8 und 9 zeigen je ein Diagramm der Parameter des Antriebsstranges mit TG1 als elektrifizierten Getriebeteil in je einer Option mit angebundener Trennkupplung K0.

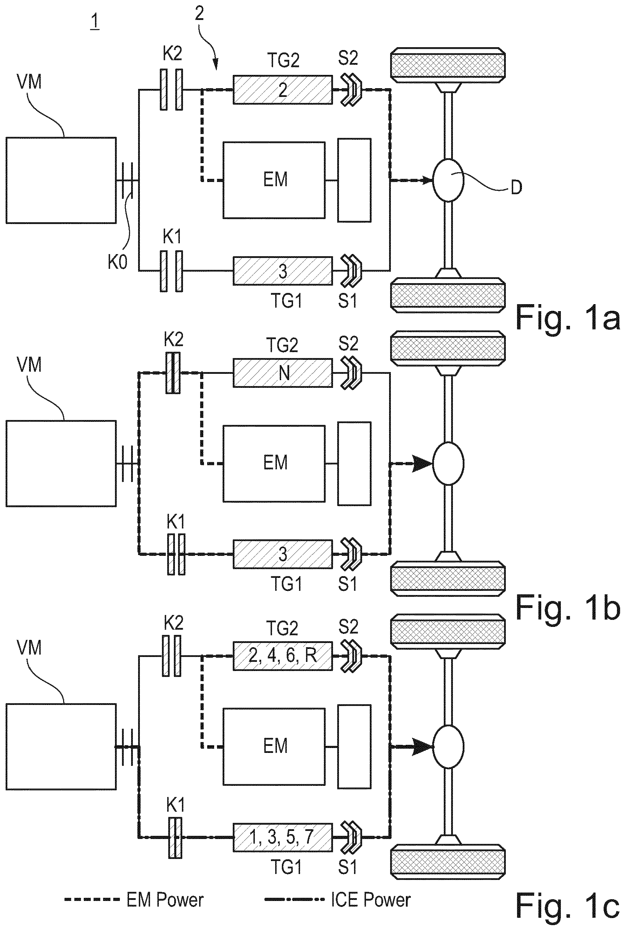

Die Figur 1a zeigt einen beispielhaften Antriebsstrang 1, wie er aus dem Stand der Technik bekannt ist. Ein Verbrennungsmotor VM treibt ein Getriebe 2 mit zwei Teilgetriebe TG1 und TG 2, wobei die Teilgetriebe TG1 und TG2 über Kupplungen K1 und K2 vom Verbrennungsmotor VM entkoppelbar sind.

Getriebeausgangsseitig mündet der Antriebsstrang aus beiden Teilgetrieben an einem Differential D.

Am Teilgetriebe TG2 ist die elektrische Maschine EM angekoppelt. Das erfindungsgemäße Verfahren startet mit einem Fahrzustand, in dem allein die elektrische Maschine EM das Fahrzeug antreibt. Der Verbrennungsmotor VM steht still und ist noch nicht gezündet. Der Verbrennungsmotor VM ist über beide geöffneten Kupplungen K1 und K2 vom Rest des Antriebsstranges abgekoppelt. Im Teilgetriebe TG2 ist für den rein elektrischen Antrieb mit der elektrischen Maschine EM der zweite Gang eingelegt. Die Schaltkupplung S2 ist dabei geschlossen. Damit fließt die Antriebsenergie von der elektrischen Maschine EM über das Teilgetriebe TG 2 mit der Gangstufe 2 auf das Differential D.

Im Teilgetriebe TG1, dass nicht mit der elektrischen Maschine EM direkt verbunden ist, ist während der rein elektrischen Fahrt der Gang der dritten Gangstufe eingelegt und die Kupplung K1 geöffnet.

In der Figur 1b ist die Fahrsituation gezeigt, in der die Leistung der elektrischen Maschine EM über das Teilgetriebe TG1 geleitet wird.

Durch Übertragung der Leistung der elektrischen Maschine EM über das Teilgetriebe TG1, das nicht mit der elektrischen Maschine EM verbunden ist, kann das Teilgetriebe TG2, das mit der elektrischen Maschine EM verbunden ist, in Neutral geschalten werden. Anschließend können beide Kupplungen geschlossen werden, wobei die Kupplung K1 schlupfend betrieben wird. Es liegt dann eine ähnliche Situation wie bei einem P2-Hybridgetriebe vor.

Die Leistung der elektrischen Maschine EM wird über die Kupplung K2 auf den Teilgetriebestrang TG1 abgesetzt, wobei die Kupplung K1 nur teilweise geschlossen ist. Über die dritte Gangstufe gelangt die Leistung an das Differential D. Dadurch, dass Leistung an der Kupplung K1 immer von der schnell drehenden Seite der elektrischen Maschine EM zur langsam drehenden Seite des Teilgetriebes TG1 im dritten Gang fließt, ist das Anschleppen des Verbrennungsmotors möglich. Das Starten des Verbrennungsmotors ist also während der Fahrt und ohne Zugkraftunterbrechung möglich. Durch Erhöhung der Drehzahl der elektrischen Maschine EM bei geschlossener Kupplung K2 und schlupfender Kupplung K1 kann die Drehzahl des Verbrennungsmotors VM unabhängig von Raddrehzahl gestartet werden.

In der Figur 1c ist die Fahrsituation dargestellt, wie sie nach dem Starten des Verbrennungsmotors VM vorhanden ist. Der Verbrennungsmotor VM treibt über die Kupplung K1 in den Teilgetriebestrang TG1 und in die dritte Gangstufe ein.

Die elektrische Maschine wiederum treibt über das Teilgetriebe TG2 und den zweiten Gang mit Zusatzenergie ebenfalls das Differential D. Die Kupplung K2 ist dabei geöffnet.

Alternative ist auch eine Ausführungsform möglich, in der die elektrische Maschine im ersten Teilgetriebe TG1 angebunden ist. Das Verfahren verläuft dann äquivalent mit den jeweiligen Kupplungen und Gangstufen.

In der erfindungsgemäßen Ausführungsform ist der Verbrennungsmotor VM auch über eine Kupplung K0 mit den beiden Getriebeeingängen verbunden.

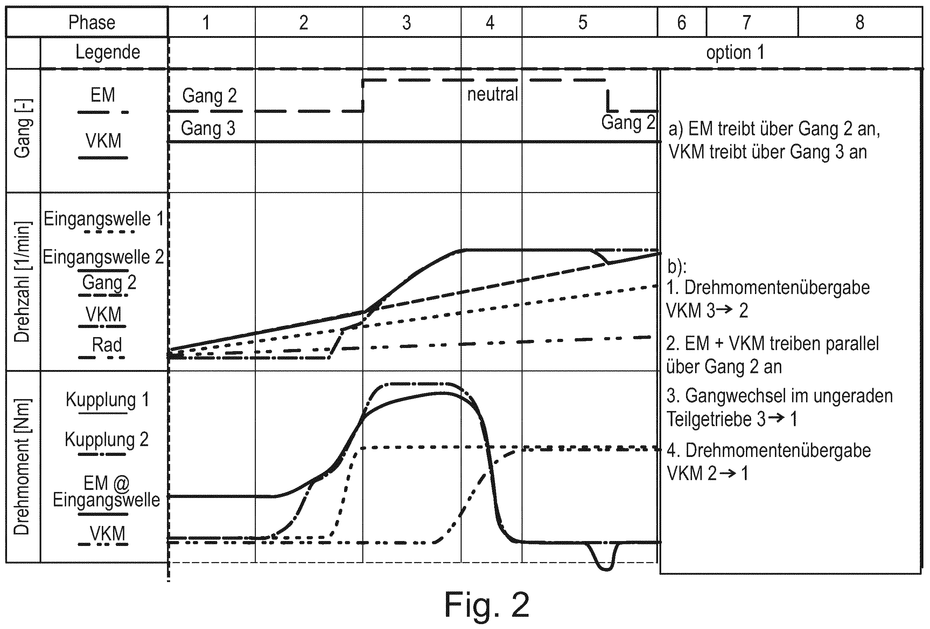

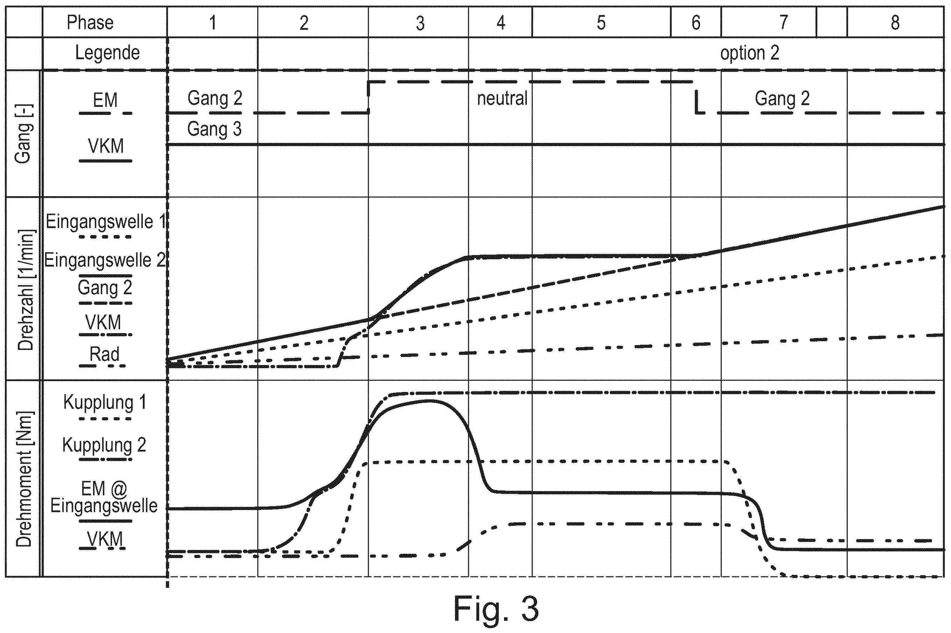

In den Figuren 2 und 3 sind in unterschiedlichen Graphen der Ablauf des Starts des Verbrennungsmotors und das Verfahren zum Antreiben des Fahrzeugs mit der in der Figur 1 gezeigten Getriebevariante wiedergegeben.

Beginnend von oben ist der Verlauf der Gangeinstellung als erstes über der Zeit dargestellt. Dabei ist gezeigt, dass die elektrische Maschine EM im Teilgetriebe TG2 in der zweiten Gangstufe betrieben wird, dann in einen neutralen Zustand geschaltet wird, um dann final wieder in der zweiten Gangstufe betrieben zu werden. Das Teilgetriebe TG1 dagegen verbleibt in der dritten Gangstufe.

In der mittleren Darstellung der Figuren 2 und 3 sind die Verläufe der Drehzahlen der unterschiedlichen Komponenten des Antriebsstrangs dargestellt.

Die beiden Getriebeeingangswellen des Doppelkupplungsgetriebes 2 drehen mit unterschiedlichen Drehzahlen n1 und n2. Der Verlauf der Drehzahlen über der Zeit ist für die Eingangswelle des ersten Teilgetriebes TG1 linear ansteigend, für die Eingangswelle des zweiten Teilgetriebes TG2 wird der Verlauf dagegen durch das Zünden des Verbrennungsmotors beeinflusst, was später im Detail beschrieben wird.

Die unterste Drehzahlkurve stellt die Raddrehzahl dar, die kontinuierlich ansteigt. Weiterhin ist der zeitliche Verlauf der Drehzahl der zweiten Gangstufe dargestellt, der kontinuierlich ansteigt.

Im unteren Bereich der Figuren 2 und 3 sind die Drehmomente über der Zeit dargestellt.

Beginnend von dem rein elektrischen Fahren im Teilgetriebe TG2, wobei beide Kupplungen der Teilgetriebe offen sind, wird zunächst die Kupplung K2 zunehmen geschlossen. Kurz vor dem Zeitpunkt, an dem der zweite Gang im Teilgetriebe TG2 ausgelegt wird, wird das Drehmoments der elektrischen Maschine EM erhöht. Die Kupplung K1 wird zusätzlich teilweise geschlossen und in Schlupf betrieben. Dadurch wird der Verbrennungsmotor VM angeschleppt, erreicht seine Zünddrehzahl und wird gestartet. Die Drehzahl des Verbrennungsmotors VM steigt an.

Erst nachdem der Verbrennungsmotor VM gezündet hat und eine Zieldrehzahl aufweist, wird das Drehmoment der elektrischen Maschine EM zurückgenommen.

Das Drehmoment des Verbrennungsmotors steigt nach der Zündung an, wobei die Kupplung K1 weiterhin schlupfend betrieben wird. Das Fahrzeug wird nach der Ausführung der Figur 2 nach dem Verbrennungsmotorstart in einem Modus betrieben, indem die elektrische Maschine nach dem Einlegen des zweiten Ganges antreibt, während der Verbrennungsmotor VM im dritten Gang über das erste Teilgetriebe TG1 und die schlupfende Kupplung K1 antreibt.

Abhängig von der Fahrsituation kann eine Drehmomentübergabe des Verbrennungsmotors vom dritten in den zweiten Gang erfolgen. Dann erhält man einen Antrieb, in dem beide Antriebsmaschinen in demselben Gang, dem zweiten Gang antreiben.

Wenn das Fahrzeug eine größere Steigung bewältigen muss, ist auch ein Gangwechsel des Verbrennungsmotors in den ersten Gang möglich. Im ersten Teilgetriebe TG1 wird dazu vom dritten in den ersten Gang geschaltet und eine Drehmomentübergabe aus dem zweiten Gang auf den ersten Gang vorgenommen.

Figur 3 zeigt eine die Ausführung, wenn nach erfolgtem Start des Verbrennungsmotors und nach Anpassung der Drehzahl des Verbrennungsmotors an die Drehzahl des zweiten Gangs die schlupfende Kupplung K1 im ersten Teilgetriebe geöffnet wird, während die Kupplung K2 des zweiten Teilgetriebes geschlossen bleibt.

Während der Anpassungsphase nach dem Starten des Verbrennungsmotors bleibt in diesem Beispiel der Figur 3 das Drehmoment der elektrischen Maschinen noch solange bereitgestellt, bis die Verbrennungsmotordrehzahl an die Drehzahl der Eingangswelle des zweiten Teilgetriebes TG2 und an den zweiten Gang angepasst ist. Erst dann wird die schlupfende Kupplung K1 geöffnet und das Drehmoment der elektrischen Maschinen reduziert.

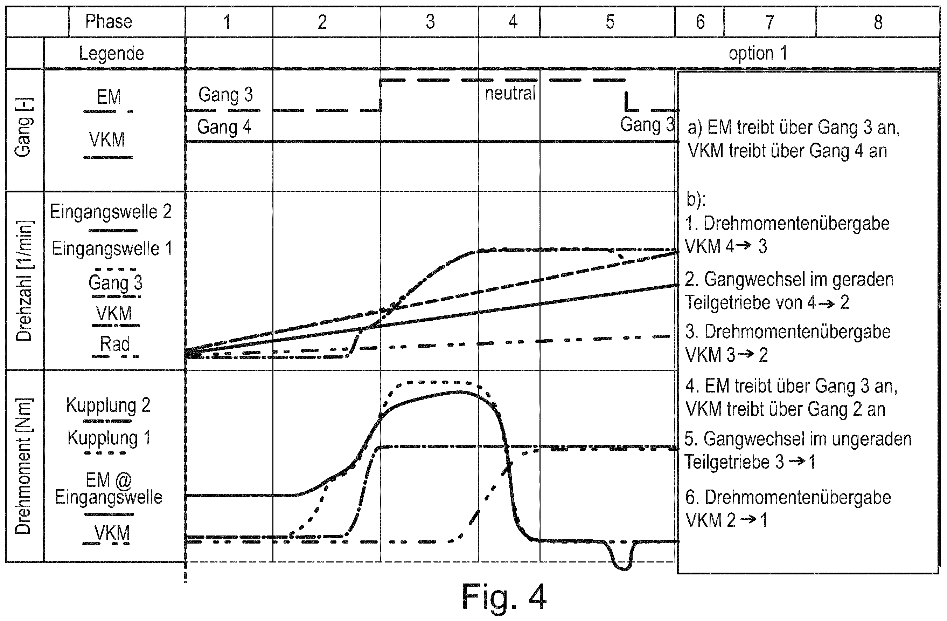

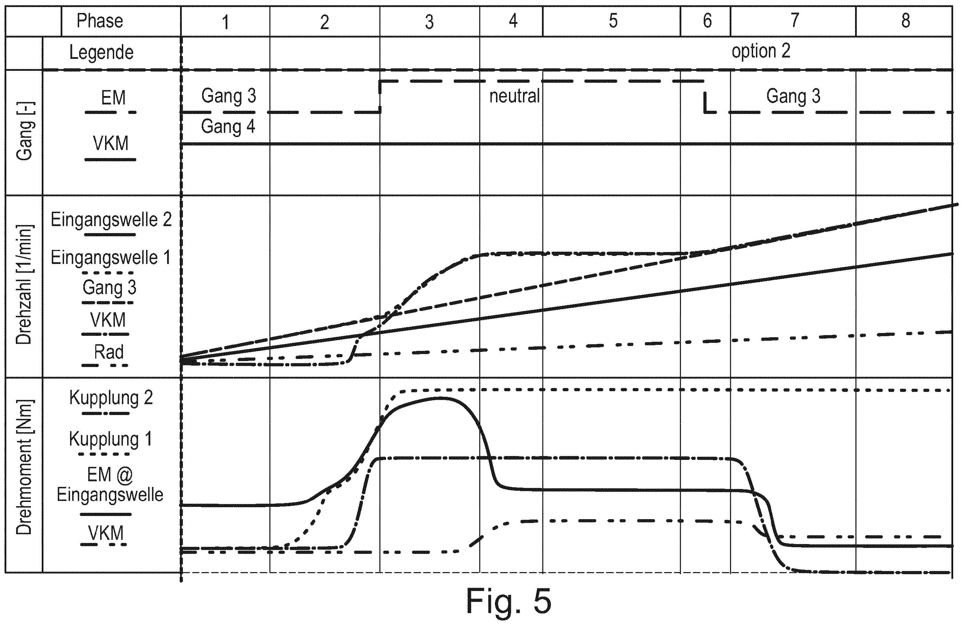

Die in den Figuren 4 und 5 dargestellte Varianten beziehen sich auf einen Ausführungsform, in der die elektrische Maschine an das erste Teilgetriebe TG1 angebunden ist.

Hier wird der Verbrennungsmotor VM in einer Situation gestartet, in der die dritte Gangstufe im ersten Teilgetriebe TG1 und die vierte Gangstufe im zweiten Teilgetriebe TG2 eingelegt sind.

Das Verfahren verläuft analog zu dem Verfahren nach den Figuren 2 und 3.

Nach dem Anreißen des Verbrennungsmotors nach Figur 4 wird das Fahrzeug in einer Variante über die elektrische Maschine im dritten Gang und den Verbrennungsmotor VM im vierten Gang angetrieben.

Sollte aber ein Gangwechsel notwendig werden, wird der Verbrennungsmotor VM vom vierten auf den dritten Gang geschaltet. Dazu wird der Gangwechsel im ersten Teilgetriebe vom vierten auf den zweiten Gang vorbereitet. Die Drehmomentübergabe des Verbrennungsmotors erfolgt dann vom dritten in den zweiten Gang. Damit treibt die elektrische Maschine in den dritten Gang und der Verbrennungsmotor VM in den zweiten Gang ein.

Anschließend erfolgt der Gangwechsel im ersten Teilgetriebe vom dritten in den ersten Gang und die Drehmomentübergabe des Verbrennungsmotors vom zweiten in den ersten Gang.

Die Ausführung nach Figur 5 zeigt einen finalen Zustand mit einem Antrieb des Fahrzeugs über die elektrische Maschine im dritten Gang, während des Verbrennungsmotor VM im vierten Gang betrieben wird.

Kritisch in den bisher geschilderten Beispielen ist zum einem die Tatsache, dass der Verbrennungsmotor, wenn keine Trennkupplung K0 vorhanden ist, immer mitgeschleppt wird. Zum andern erfordern die Verfahrensschritte dadurch eine präzise und sehr kritische Steuerung, um die zeitlich enge Abfolge der einzelnen Verfahrensschritte ohne Zugkraftunterbrechung umzusetzen.

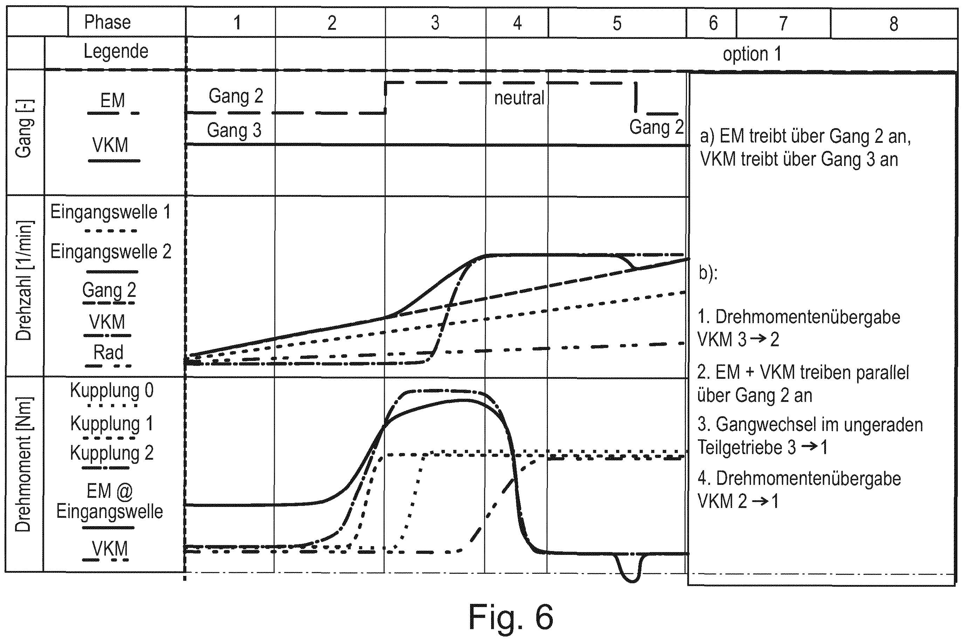

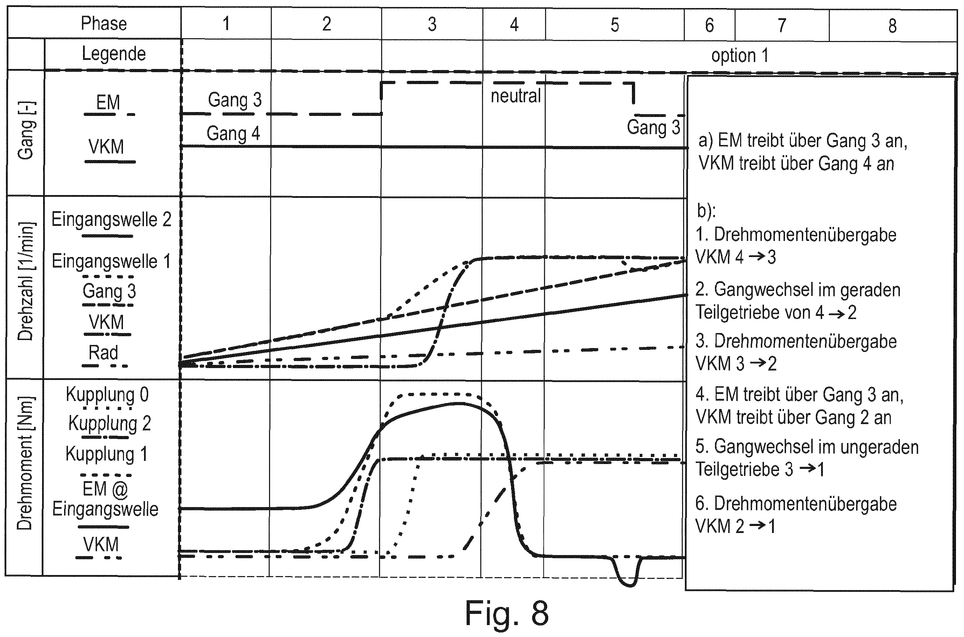

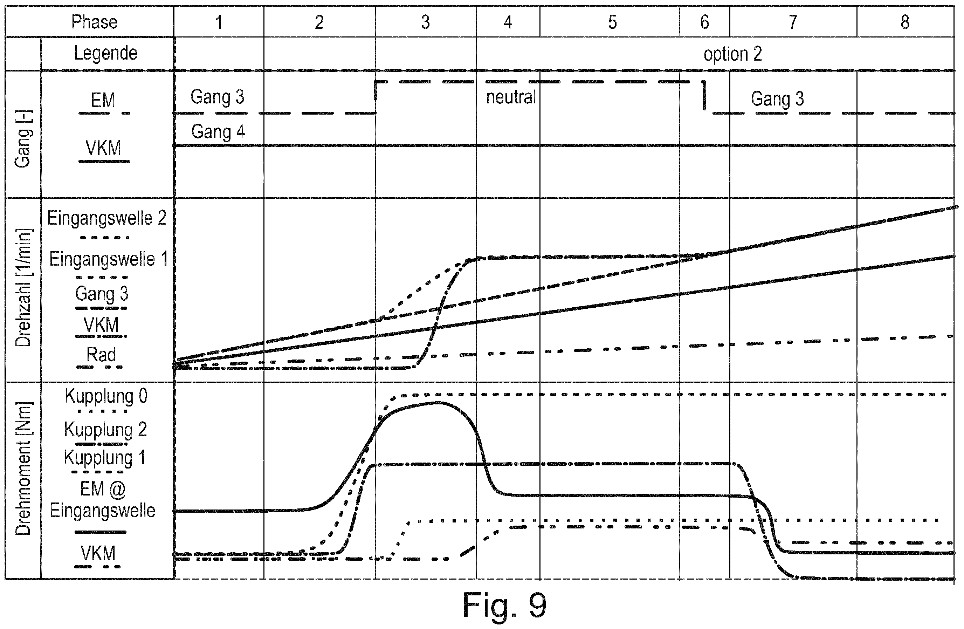

In den Ausführungsbeispielen mit den Figuren 6 und 7, sowie den Figuren 8 und 9 für die erfindungsgemäße Anordnung der elektrischen Maschine, werden Verfahren vorgestellt, die mit einem Antriebsstrangaufbau mit einer Trennkupplung K0 umgesetzt werden.

Der Vorteil der Verwendung einer Trennkupplung ist dabei, dass beide Antriebsmaschinen unabhängig voneinander auf Zieldrehzahl gebracht werden können.

Analog zu den Beschreibungen unterschiedlicher Szenarien ohne eine erfindungsgemäße Trennkupplung sind die Lösungen mit Trennkupplung dargestellt.

In Figur 6 ist dazu der Drehmomentverlauf der Kupplung K0 im untersten Drittel der Figur eingezeichnet.

Mit dem Schließen der Kupplung K0 wird die Drehzahl des Verbrennungsmotors bis zum Starten hochgezogen und erreicht die Leerlaufdrehzahl, während unabhängig davon die elektrische Maschine ihr Drehmoment zurücknimmt. Der weitere Verlauf ist wie in Figur 2 beschrieben.

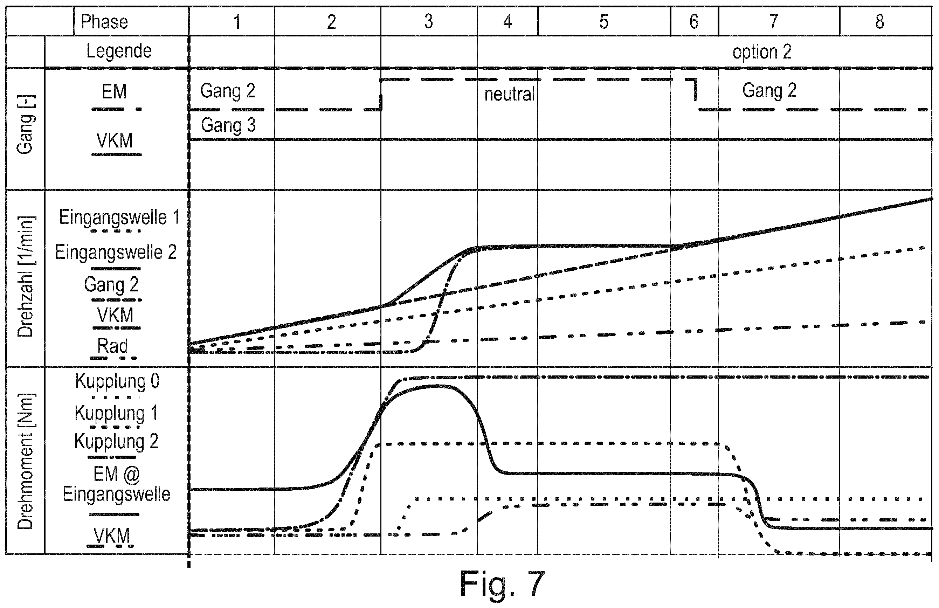

Figur 7 zeigt ein analoges Verfahren wie in Figur 3 beschreiben. Dabei wird die Trennkupplung K0 schlupfend geschlossen, während die elektrische Maschine noch Drehmoment zur Verfügung stellt.

## Patentansprüche

1. Verfahren zum Starten eines Verbrennungsmotors (VM) in einem Antriebsstrang (1) mit hybridisiertem Doppelkupplungsgetriebe mit zwei Kupplungen (K1, K2) und zwei Teilgetrieben (TG 1, TG2), wobei eine elektrische Maschine (EM) an das elektrifizierte Teilgetriebe angebunden ist, und der Verbrennungsmotor (VM) über eine Trennkupplung (K0) und über zwei Kupplungen (K1, K2) mit beiden Teilgetrieben (TG1, TG2) verbindbar ist, wobei ausgehend von einem rein elektrischen Fahrbetrieb über das elektrifizierte Teilgetriebe und eine erste Gangstufe im elektrifizierten Teilgetriebe der Verbrennungsmotor (VM) gestartet wird, wobei die Antriebsleistung der elektrischen Maschine (EM) über beide Kupplungen (K1, K2) auf das nicht elektrifizierte Teilgetriebe übertragen wird, wobei das elektrifizierte Teilgetriebe neutral geschaltet wird, während das nicht elektrifizierte Teilgetriebe in einer zweiten Gangstufe betrieben wird, **dadurch gekennzeichnet, dass** die Trennkupplung (K0) geschlossen wird, nachdem die beiden Kupplungen (K1, K2) für die Teilgetriebe (TG1, TG2) zumindest teilweise geschlossen wurden und die Trennkupplung (K0) schlupfend betrieben wird, bis die Leerlaufdrehzahl des Verbrennungsmotors (VM) erreicht wird.

2. Verfahren zum Starten eines Verbrennungsmotors nach Anspruch 1, **dadurch gekennzeichnet, dass** die Kupplung (K1, K2) des elektrifizierten Teilgetriebes geschlossen ist und die Kupplung (K1, K2) des nicht elektrifizierten Teilgetriebes im Schlupf betrieben wird.

3. Verfahren zum Starten eines Verbrennungsmotors nach einem der Ansprüche 1 oder 2 , **dadurch gekennzeichnet, dass** Leistung an der Kupplung (K1, K2) des nicht elektrifizierten Teilgetriebes von der schnell drehenden Seite der elektrischen Maschine (EM) zur langsam drehenden Seite des nicht elektrifizierten Teilgetriebes in der zweiten Gangstufe fließt, indem durch die Entkopplung der Drehzahl der elektrischen Maschine (EM) von der Abtriebsdrehzahl ein Starten des Verbrennungsmotors erfolgt und die Kupplung des elektrifizierten Teilgetriebes geschlossen und die Kupplung des nicht elektrifizierten Teilgetriebes im Schlupf betrieben wird, wobei zusätzlich im nicht elektrifizierten Teilgetriebe ein Gang mit einer längeren Übersetzung als der aktive Fahrgang vorgewählt wird.

4. Verfahren zum Starten eines Verbrennungsmotors nach einem der Ansprüche 1 - 3, **dadurch gekennzeichnet, dass** das Drehmoment der elektrischen Maschine (EM) mit dem Schließen, bzw. mit dem teilweisen Schließen der Kupplungen (K1, K2) erhöht wird.

5. Verfahren zum Starten eines Verbrennungsmotors nach einem der Ansprüche 1 - 4, **dadurch gekennzeichnet, dass** nach dem Erreichen einer Zieldrehzahl des Verbrennungsmotors das Drehmoment des Verbrennungsmotors auf die erste Gangstufe des elektrifizierten Teilgetriebes gelegt wird.

6. Verfahren zum Starten eines Verbrennungsmotors nach einem der Ansprüche 1-3, **dadurch gekennzeichnet, dass** nach dem Erreichen einer Zieldrehzahl des Verbrennungsmotors das Drehmoment des Verbrennungsmotors auf die zweite Gangstufe des nicht elektrifizierten Teilgetriebes gelegt wird.

7. Verfahren zum Starten eines Verbrennungsmotors nach einem der Ansprüche 1-6, **dadurch gekennzeichnet, dass** ein Boosten über beide Teilgetriebe oder über das elektrifizierte Teilgetriebe erfolgt.

## Claims

1. Method for starting a combustion engine (VM) in a drive train (1) with a hybridized dual clutch transmission with two clutches (K1, K2) and two sub-transmissions (TG1, TG2), an electric machine (EM) being attached to the electrified sub-transmission, and it being possible for the combustion engine (VM) to be connected via a separating clutch (K0) and via two clutches (K1, K2) to the two sub-transmissions (TG1, TG2), the combustion engine (VM) being started proceeding from purely electric driving operation via the electrified sub-transmission and a first gear stage in the electrified sub-transmission, the drive power of the electric machine (EM) being transmitted via the two clutches (K1, K2) to the non-electrified sub-transmission, the electrified sub-transmission being shifted into neutral while the non-electrified sub-transmission is operated in a second gear stage, **characterized in that** the separating clutch (K0) is closed after the two clutches (K1, K2) for the sub-transmissions (TG1, TG2) have been closed at least partially and the separating clutch (K0) is operated with slip until the idling rotational speed of the combustion engine (VM) is reached.

2. Method for starting a combustion engine according to Claim 1, **characterized in that** the clutch (K1, K2) of the electrified sub-transmission is closed and the clutch (K1, K2) of the non-electrified sub-transmission is operated with slip.

3. Method for starting a combustion engine according to either of Claims 1 or 2, **characterized in that** power flows at the clutch (K1, K2) of the non-electrified sub-transmission from the rapidly rotating side of the electric machine (EM) to the slowly rotating side of the non-electrified sub-transmission in the second gear stage, by starting of the combustion engine taking place by way of the decoupling of the rotational speed of the electric machine (EM) from the output rotational speed, and the clutch of the electrified sub-transmission being closed and the clutch of the non-electrified sub-transmission being operated with slip, a gear with a longer transmission ratio than the active driving gear being additionally pre-selected in the non-electrified sub-transmission.

4. Method for starting a combustion engine according to one of Claims 1 to 3, **characterized in that** the torque of the electric machine (EM) is increased by way of the closure or by way of the partial closure of the clutches (K1, K2).

5. Method for starting a combustion engine according to one of Claims 1-4, **characterized in that** the torque of the combustion engine is applied to the first gear stage of the electrified sub-transmission after a target rotational speed of the combustion engine is reached.

6. Method for starting a combustion engine according to one of Claims 1 to 3, **characterized in that** the torque of the combustion engine is applied to the second gear stage of the non-electrified sub-transmission after a target rotational speed of the combustion engine is reached.

7. Method for starting a combustion engine according to one of Claims 1 to 6, **characterized in that** boosting takes place via the two sub-transmissions or via the electrified sub-transmission.

## Revendications

1. Procédé de démarrage d'un moteur à combustion interne (VM) dans une chaîne cinématique (1), comprenant une boîte de vitesses à double embrayage hybridée, pourvue de deux embrayages (K1, K2) et de deux demi-boîtes de vitesses (TG1, TG2), une machine électrique (EM) étant rattachée à la demi-boîte de vitesses électrifiée, et le moteur à combustion interne (VM) pouvant être relié aux deux demi-boîtes de vitesses (TG1, TG2) par l'intermédiaire d'un embrayage de séparation (K0) et de deux embrayages (K1, K2), dans lequel, en partant d'un mode de conduite purement électrique, le moteur à combustion interne (VM) est démarré par l'intermédiaire de la demi-boîte de vitesses électrifiée et d'un premier rapport de vitesse dans la demi-boîte de vitesses électrifiée, la puissance d'entraînement de la machine électrique (EM) étant transmise par l'intermédiaire des deux embrayages (K1, K2) à la demi-boîte de vitesses non électrifiée, la demi-boîte de vitesses électrifiée étant mise au point mort pendant que la demi-boîte de vitesses non électrifiée fonctionne dans un deuxième rapport de vitesse, **caractérisé en ce que** l'embrayage de séparation (K0) est fermé après que les deux embrayages (K1, K2) pour les demi-boîtes de vitesses (TG1, TG2) ont été fermés au moins partiellement et l'embrayage de séparation (K0) fonctionne en glissement jusqu'à ce que la vitesse de ralenti du moteur à combustion interne (VM) soit atteinte.

2. Procédé de démarrage d'un moteur à combustion interne selon la revendication 1, **caractérisé en ce que** l'embrayage (K1, K2) de la demi-boîte de vitesses électrifiée est fermé et l'embrayage (K1, K2) de la demi-boîte de vitesses non électrifiée fonctionne en glissement.

3. Procédé de démarrage d'un moteur à combustion interne selon l'une quelconque des revendications 1 ou 2, **caractérisé en ce que** la puissance au niveau de l'embrayage (K1, K2) de la demi-boîte de vitesses non électrifiée circule du côté à rotation rapide de la machine électrique (EM) au côté à rotation lente de la demi-boîte de vitesses non électrifiée dans le deuxième rapport de vitesse **en ce que** le découplage de la vitesse de rotation de la machine électrique (EM) de la vitesse de rotation de sortie produit un démarrage du moteur à combustion interne, et l'embrayage de la demi-boîte de vitesses électrifiée est fermé, et l'embrayage de la demi-boîte de vitesses non électrifiée fonctionne en glissement, dans lequel en outre une vitesse ayant un rapport de transmission plus long que la vitesse de conduite active est présélectionnée dans la demi-boîte de vitesses non électrifiée.

4. Procédé de démarrage d'un moteur à combustion interne selon l'une quelconque des revendications 1 à 3, **caractérisé en ce que** le couple de la machine électrique (EM) est augmenté selon la fermeture ou la fermeture partielle des embrayages (K1, K2).

5. Procédé de démarrage d'un moteur à combustion interne selon l'une quelconque des revendications 1 à 4, **caractérisé en ce qu'**une fois une vitesse de rotation cible du moteur à combustion interne atteinte, le couple du moteur à combustion interne est réglé sur le premier rapport de vitesse de la demi-boîte de vitesses électrifiée.

6. Procédé de démarrage d'un moteur à combustion interne selon l'une quelconque des revendications 1 à 3, **caractérisé en ce qu'**une fois une vitesse de rotation cible du moteur à combustion interne atteinte, le couple du moteur à combustion interne est réglé sur le deuxième rapport de vitesse de la demi-boîte de vitesses non électrifiée.

7. Procédé de démarrage d'un moteur à combustion interne selon l'une quelconque des revendications 1 à 6, **caractérisé en ce qu'**une suralimentation est effectuée par l'intermédiaire des deux demi-boîtes de vitesses ou par l'intermédiaire de la demi-boîte de vitesses électrifiée.
